# EUROPÄISCHE PATENTSCHRIFT

(11) **EP 2 581 720 B1**
(45) Veröffentlichungstag und Bekanntmachung des Hinweises auf die Patenterteilung: **27.08.2014**
(21) Anmeldenummer: 12182219.1
(22) Anmeldetag: 29.08.2012
(51) Int. Cl.: G01G 3/14, G01G 21/28, G01G 21/23

(54) **Wägezelle**
Weighing cell
Cellule de pesage

(30) Priorität: 10.10.2011 DE 102011115496
(43) Veröffentlichungstag der Anmeldung: 17.04.2013
(73) Patentinhaber: Bizerba GmbH & Co. KG, 72336 Balingen (DE)
(72) Erfinder: Groß, Andreas, 72072 Tübingen (DE)
(74) Vertreter: Manitz, Finsterwald & Partner GbR

(56) Entgegenhaltungen:
- JP-A- 5 248 928
- US-A- 4 488 611
- US-A- 5 736 685

## Beschreibung

Die vorliegende Erfindung betrifft eine Wägezelle mit einem als Biegestab ausgebildeten Messkörper, der einen Gelenkabschnitt aufweist, welcher zwischen einem Kraftaufnahmeabschnitt und einem Krafteinleitungsabschnitt angeordnet ist und einen nach außen hermetisch dicht abgeschlossenen Hohlraum aufweist, und mit wenigstens einem an dem Gelenkabschnitt angeordneten Dehnungsmessstreifen. Ein derartige Wägezelle ist aus der DE 10 2004 047 508 B3 oder US 4,488,611 bekannt.

Bei Bandwägevorrichtungen, insbesondere bei Kontrollwaagen bzw. Checkweighern und Preisauszeichnern, befindet sich auf der Wägezelle ein Bandkörper mit einem Motor. Zur Stromversorgung und zur Ansteuerung dieses Motors ist es erforderlich, über die Wägezelle ein Motorkabel zu dem Motor zu führen. Das Motorkabel ist dabei außen seitlich an der eigentlichen Wägezelle angebracht. Für höhere IP- Schutzklassen und/oder für einen Einsatz in der Lebensmittelverarbeitung wird die Wägezelle und das Motorkabel in einem gemeinsamen Gehäuse gekapselt. Derartige Kapselungen beanspruchen jedoch viel Platz und sind zudem teuer.

Der Erfindung liegt die Aufgabe zugrunde, eine Wägezelle der eingangs genannten Art anzugeben, mit der die vorgenannten Nachteile vermieden werden können.

Diese Aufgabe wird durch eine Wägezelle mit den Merkmalen des Anspruchs 1 gelöst, und insbesondere dadurch, dass der Messkörper eine integrierte Leitungs- bzw. Kabeldurchführung aufweist, die sich von kraftaufnahmeseitig über den Hohlraum nach krafteinleitungsseitig erstreckt.

Die erfindungsgemäße Wägezelle kommt daher ohne eine Kapselung und ohne eine separate Leitungs- bzw. Kabelführung aus. Trotzdem ist es weiterhin möglich, eine eine erfindungsgemäße Wägezelle aufweisende Bandwägevorrichtung mit Wasser zu reinigen, auch mittels eines Hochdruckreinigers, da eine Motorleitung bzw. ein Motorkabel nun durch den Messkörper selbst und im Bereich des Hohlraums, beispielsweise eines Durchgangs oder eines Teils hiervon, durch die hermetisch dichte Abschließung gegen äußere Umgebungseinflüsse geschützt ist. Hierdurch ergibt sich eine Kosteneinsparung. Darüber hinaus wird Bauraum eingespart.

Bei der Wägezelle wird eine von der Gewichtskraft eines Wägeguts verursachte Deformation des Messkörpers mittels des einen oder der mehreren Dehnungsmessstreifen gemessen. Der Messkörper, d.h. ein verformbar elastischer Messkörper, kann grundsätzlich verschiedener Bauart sein, beispielsweise als Doppelbiegebalken, Scherbiegebalken oder Einzelbiegebalken ausgebildet sein.

Gemäß einer Ausführungsform der Erfindung ist der wenigstens eine Dehnungsmessstreifen an einer Außenseite des Messkörpers, insbesondere in einer an der Außenseite vorgesehenen Vertiefung des Messkörpers, angeordnet. Bevorzugt sind der oder die Dehnungsmessstreifen abgedeckt, z.B. durch eine verschweißte Metallfolie, um gegen äußere Umgebungseinflüsse geschützt zu sein. Alternativ oder zusätzlich kann der wenigstens eine Dehnungsmessstreifen aber auch innerhalb des Hohlraums angeordnet sein. Eine separate Abdeckung ist dann nicht erforderlich, da der Hohlraum hermetisch dicht abgeschlossen ist.

Die hermetisch dichte Abschließung kann dadurch erreicht werden, dass der Hohlraum durch wenigstens einen Deckel, insbesondere beidseitig jeweils durch einen Deckel, verschlossen ist. Bevorzugt ist der wenigstens eine Deckel jeweils elastisch deformierbar, insbesondere aus Federstahl, und/oder rotationssymmetrisch ausgebildet. Insbesondere kann der wenigstens eine Deckel jeweils als Tiefziehteil ausgebildet sein und/oder mit einem Außenrand mit dem Messkörper verschweißt sein. Grundsätzlich ist es auch möglich, dass der wenigstens eine Deckel jeweils aus einem elastischen verformbaren Kunststoff hergestellt ist.

Insbesondere ist eine elektrische Leitung, insbesondere ein mehrere Drähte umfassendes elektrisches Kabel oder mehrere einzelne, isolierte Drähte, zur Stromversorgung eines Motors insbesondere einer Bandwägevorrichtung, beispielsweise einer Kontrollwaage, vorgesehen, die durch die Leitungsdurchführung hindurchgeführt ist.

Dabei ist es bevorzugt, wenn die elektrische Leitung im Bereich des Hohlraums frei durchhängend ausgebildet ist. Dies ist deshalb von Vorteil, da bei einer Deformation des Messkörpers durch eine Gewichtskraft eines Wägeguts, die auf den Krafteinleitungsabschnitt einwirkt, sich ein relativer Abstand zwischen Krafteinleitungsabschnitt und Kraftaufnahmeabschnitt vergrößert. Diese Abstandsvergrößerung kann durch die aufgrund des Durchhängens gewonnene zusätzliche Leitungslänge kompensiert werden, so dass die Entstehung eines Kraftnebenschlusses zumindest weitgehend vermieden werden kann.

Die elektrische Leitung kann im Bereich des Hohlraums frei von einer isolierenden Umhüllung ausgebildet sein, insbesondere um die Flexibilität der elektrischen Leitung zu erhöhen, wodurch Kraftnebenschlüsse noch besser vermieden werden können. Die elektrische Leitung kann zumindest abschnittsweise, insbesondere im Bereich des Hohlraums, als mehrere einzelne, jeweils mit einer Isolierung, insbesondere einem Klarlack oder einem sonstigen Lack, beschichtete Drähte ausgebildet sein. Grundsätzlich können Drähte der elektrischen Leitung als Golddrähte, die sehr flexibel sind und einen hohen Strom führen können, ausgebildet sein.

Nach einer anderen Ausführungsform kann die elektrische Leitung an den beiden Ausgängen der Leitungsdurchführung jeweils einen Stecker aufweisen und/oder kann an den beiden Ausgängen der Leitungsdurchführung jeweils eine Dichtung vorgesehen sein. Durch die Stecker kann eine in einer Bandwägevorrichtung eingebaute Wägezelle im Reparaturfall besonders einfach ausgetauscht werden. Durch die Dichtungen kann die Leitungsdurchführung auf einfache Weise nach außen abgedichtet werden.

Die Erfindung betrifft ferner eine Bandwägevorrichtung, insbesondere eine Kontrollwaage oder einen Preisauszeichner, mit einer Wägezelle, wie sie vorstehend beschrieben ist.

Weitere vorteilhafte Ausgestaltungen der Erfindung sind in den Unteransprüchen, der Figurenbeschreibung und der Zeichnung beschrieben.

Die Erfindung wird im Folgenden beispielhaft unter Bezugnahme auf die Zeichnung beschrieben. Es zeigen,
- Fig. 1: eine Seitenansicht einer erfindungsgemäßen Wägezelle gemäß einer Ausführungsform, und
- Fig. 2: einen Schnitt durch Wägezelle gemäß Fig. 1 entlang der Linie II-II.

In den Figuren ist eine Single-Point-Wägezelle 11 für eine nicht gezeigte Bandwägevorrichtung zum dynamischen Wiegen dargestellt. Die Wägezelle 11 umfasst einen als Block ausgebildeten Messkörper 13, insbesondere Federmesskörper, der einen Kraftaufnahmeabschnitt 15 und einen Krafteinleitungsabschnitt 17 aufweist. Der Kraftaufnahmeabschnitt 15 ist über vier Schraubbohrungen 19 an einer Grundplatte der Bandwägevorrichtung befestigbar, an dem Krafteinleitungsabschnitt 17 ist über vier Schraubbohrungen 21 ein nicht gezeigter Bandkörper mit einem Motor befestigbar.

Zwischen den beiden Abschnitten 15 und 17 ist ein Gelenkabschnitt 23 vorgesehen, so dass der Messkörper 11 als Biegestab bzw. Biegebalken wirkt. Hierzu sind in dem Gelenkabschnitt 23 ein zentraler Durchgang 25 und optional eine darüber und eine darunter angeordnete hundeknochenartige Durchbrechung 27 ausgebildet, die den Messkörper 11 jeweils vollständig durchdringen, so dass eine Parallelogramm-Struktur realisiert ist. Der Durchgang 25 umfasst zwei gegenläufige kreisrunde Bohrungen 41, die durch eine Zwischenwand 43 voneinander getrennt sind. Die beiden Bohrungen 41 stehen durch eine mittig in der Zwischenwand 43 ausgebildete kreisrunde Verbindungsbohrung 45 kleineren Durchmessers in Verbindung miteinander.

Oberhalb des Durchgangs 25 bzw. der Durchbrechungen 27 sind an der Außenseite des Messkörpers 13, in einer Vertiefung 29, mehrere Dehnungsmessstreifen (DMS) 31 angebracht, die eine Verformung des Messkörpers 13 im Bereich des Gelenkabschnitts 23 in an sich bekannter Weise detektieren. Bei der Wägezelle 11 handelt es sich daher um eine DMS-Wägezelle. Eine Last auf dem Krafteinleitungsabschnitt 17 führt zu einer hierzu proportionalen Auslenkung bzw. Verbiegung des Messkörper 11, so dass aus der Auslenkung bzw. einer Dehnung oder Stauchung des Messkörpers 11 das Gewicht der Last ermittelt werden kann. Um die Dehnungsmessstreifen 31 vor äußeren Einflüssen wie Wasser zu schützen, sind die Dehnungsmessstreifen 31 mit einer plan aufgeschweißten Abdeckung 33 versehen.

Darüber hinaus ist in dem Messkörper 13 eine Motorkabeldurchführung 35 ausgebildet, die sich von der Stirnseite des Kraftaufnahmeabschnitts 15 in Längsrichtung des Messkörpers 11 durch den Kraftaufnahmeabschnitt 15 hindurch und über den zentralen Durchgang 25, insbesondere die Verbindungsbohrung 45, hinweg in den Krafteinleitungsabschnitt 17 hinein erstreckt, um dort abzubiegen und in einem Ausgang an der Oberseite des Krafteinleitungsabschnitts 17 zu enden.

Durch diese Motorkabeldurchführung 35 ist ein elektrisches Motorkabel 37 hindurchgeführt, um für den Motor des Bandkörpers eine Spannungsversorgung bzw. Ansteuerung bereitzustellen. Im Bereich des Gelenkabschnitts 23 hängt das Kabel 37 durch. Hierdurch kann vermieden werden, dass bei einer Auslenkung des Messkörpers 13 das Kabel 37 auf Zug belastet und dadurch ein das Wägeergebnis beeinflussender Kraftnebenschluss erzeugt wird. In diesem Bereich kann das Kabel 37 frei von einer isolierenden Umhüllung ausgebildet sein. Anstelle des Motorkabels 37 können grundsätzlich auch einzelne, jeweils isolierte, insbesondere auch gegeneinander isolierte, Drähte vorgesehen sein.

An den beiden Stellen, an denen das Kabel 37 aus dem Messkörper 13 austritt, ist das Kabel 37 bevorzugt als Stecker einer Steckverbindung ausgebildet, um die Wägezelle 11 einfach an einen externen Stromkreis anschließen zu können.

Die Verbindungsbohrung 45 ist beidseitig mit jeweils einem topfartigen, in der Mitte nach außen gewölbten Deckel 39 hermetisch abgeschlossen, die an die Zwischenwand 43 angeschweißt sind, so dass ein Hohlraum ausgebildet ist, in dem das Kabel 37 vor äußeren Umgebungseinflüssen wie Wasser geschützt ist. Die Form der Bohrungen 41, 45 und die Form der Deckel 39 sowie das Material der Deckel 39 sind derart gewählt, dass bei einer Auslenkung des Messkörpers 13, die eine entsprechende Verzerrung der Form der Bohrung 41, 45 verursacht, das Entstehen einer von den Deckeln 39 hervorgerufenen, der Auslenkung entgegenwirkenden Kraft minimiert werden kann, um die von der Wägezelle 11 gemessenen Wägeergebnisse nicht bzw. möglichst nicht zu beeinflussen.

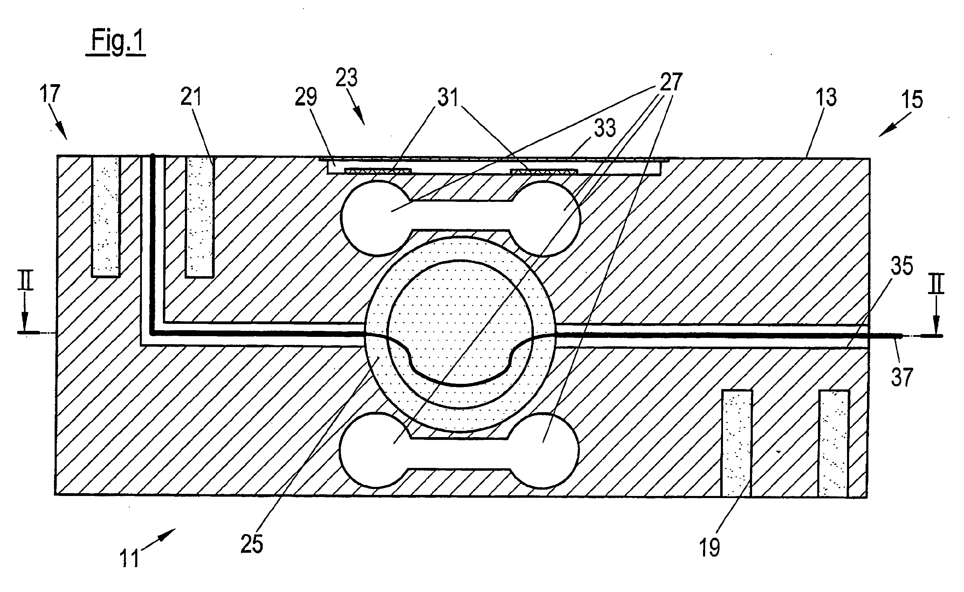

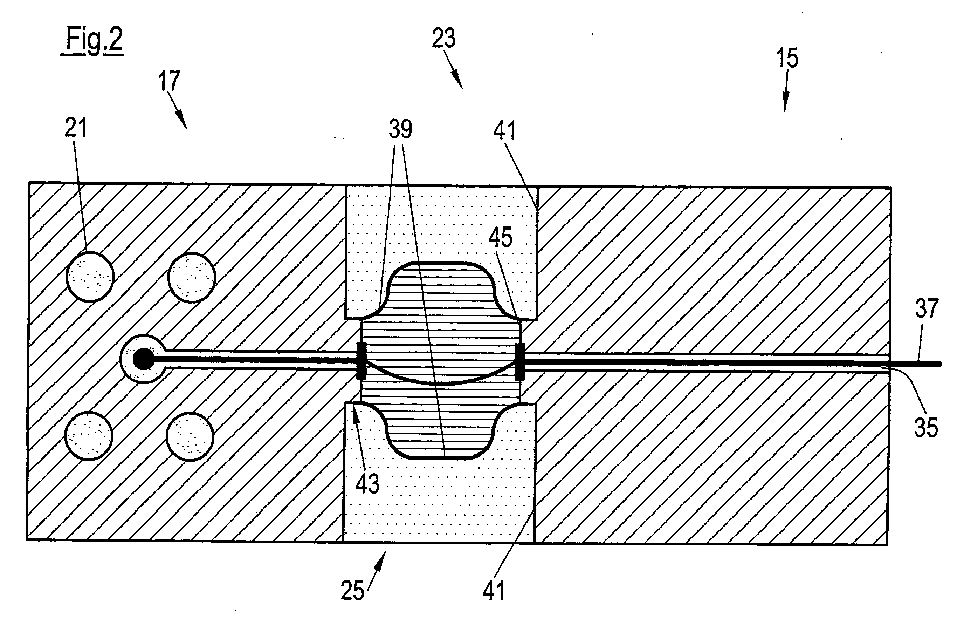

In den Figuren 1 und 2 ist der Durchgang 25 durch drei Bohrungen bzw. eine beidseitig abgestufte Bohrung ausgebildet. Darüber hinaus sind diesbezüglich auch andere Ausgestaltungen denkbar. So ist es z.B. ebenso möglich, dass der Durchgang 25 über seine gesamte Länge hinweg denselben Bohrdurchmesser besitzt und die beiden Deckel 39 dann z.B. an der Außenwand des Messkörpers 13 angeschweißt sind. Darüber hinaus ist es grundsätzlich auch möglich, dass die beiden Bohrungen 41 nicht in Fluidverbindung miteinander stehen und/oder das Kabel 37 durch eine der beiden Bohrungen 41 geführt ist.

Die vorliegende Erfindung betrifft also eine vollständig gekapselte Wägezelle mit integrierter Kabeldurchführung, so dass die Wägezelle ohne zusätzliche Kapsel und ohne zusätzliche Kabelführung in einen Checkweigher oder in einen Preisauszeichner eingebaut werden kann.

### Bezugszeichenliste

- 11: Wägezelle
- 13: Messkörper
- 15: Kraftaufnahmeabschnitt
- 17: Krafteinleitungsabschnitt
- 19: Schraubbohrung
- 21: Schraubbohrung
- 23: Gelenkabschnitt
- 25: Durchgang
- 27: Durchbrechung
- 29: Vertiefung
- 31: Dehnungsmessstreifen
- 33: Abdeckung
- 35: Motorkabeldurchführung
- 37: Motorkabel
- 39: Deckel
- 41: Bohrung
- 43: Zwischenwand
- 45: Verbindungsbohrung

## Patentansprüche

1. Wägezelle mit einem als Biegestab ausgebildeten Messkörper (13), der einen Gelenkabschnitt (23) aufweist, welcher zwischen einem Kraftaufnahmeabschnitt (15) und einem Krafteinleitungsabschnitt (17) angeordnet ist und einen nach außen hermetisch dicht abgeschlossenen Hohlraum (45) aufweist, und mit wenigstens einem an dem Gelenkabschnitt (23) angeordneten Dehnungsmessstreifen (31),
**dadurch gekennzeichnet,**
**dass** der Messkörper (13) eine integrierte Leitungsdurchführung (35) aufweist, die sich von kraftaufnahmeseitig über den Hohlraum (45), der in dem Gelenkabschnitt (23) angeordnet ist, nach krafteinleitungsseitig erstreckt.

2. Wägezelle nach Anspruch 1,
**dadurch gekennzeichnet,**
**dass** der wenigstens eine Dehnungsmessstreifen (31) an einer Außenseite des Messkörpers (13) angeordnet ist.

3. Wägezelle nach Anspruch 1 oder 2,
**dadurch gekennzeichnet,**
**dass** der Hohlraum (45) durch wenigstens einen Deckel (39) verschlossen ist, um die hermetisch dichte Abschließung zu erreichen.

4. Wägezelle nach Anspruch 3,
**dadurch gekennzeichnet,**
**dass** der wenigstens eine Deckel (39) jeweils elastisch deformierbar und/oder rotationssymmetrisch ausgebildet ist.

5. Wägezelle nach zumindest einem der vorstehenden Ansprüche,
**dadurch gekennzeichnet,**
**dass** eine elektrische Leitung (37) zur Stromversorgung eines Motors vorgesehen ist, die durch die Leitungsdurchführung (35) hindurchgeführt ist.

6. Wägezelle nach Anspruch 5,
**dadurch gekennzeichnet,**
**dass** die elektrische Leitung (37) im Bereich des Hohlraums (45) frei durchhängend ausgebildet ist.

7. Wägezelle nach Anspruch 5 oder 6,
dadurch **gekennzeiichnet**,
**dass** die elektrische Leitung (37) im Bereich des Hohlraums (45) frei von einer isolierenden Umhüllung ausgebildet ist.

8. Wägezelle nach zumindest einem der Ansprüche 5 bis 7,
**dadurch gekennzeichnet,**
**dass** die elektrische Leitung (37) zumindest abschnittsweise als mehrere einzelne, jeweils mit einer Isolierung, insbesondere einem Klarlack, beschichtete Drähte ausgebildet ist.

9. Wägezelle nach zumindest einem der Ansprüche 5 bis 8,
**dadurch gekennzeichnet,**
**dass** die elektrische Leitung (37) an den beiden Ausgängen der Leitungsdurchführung (35) jeweils einen Stecker aufweist und/oder dass an den beiden Ausgängen der Leitungsdurchführung (35) jeweils eine Dichtung vorgesehen ist.

10. Bandwägevorrichtung, insbesondere Kontrollwaage, mit einer Wägezelle (11) nach einem der vorstehenden Ansprüche.

## Claims

1. A load cell having a measurement body (13) which is configured as a bending beam and which has a joint section (23) which is arranged between a force absorbing section (15) and a force transmission section (17) and has a hollow space (45), which is closed in a hermetically sealed manner towards the outside, and having at least one strain gauge (31) arranged at the joint section (23),
**characterised in that**
the measurement body (13) has an integrated line leadthrough (35) which extends from the force-absorbing side via the hollow space (45), which is arranged in the joint section (23), to the force-transmitting side.

2. A load cell in accordance with claim 1,
**characterised in that**
the at least one strain gauge (31) is arranged at an outer side of the measurement body (13).

3. A load cell in accordance with claim 1 or claim 2,
**characterised in that**
the hollow space (45) is closed by at least one cover (39) to achieve the hermetically sealed closure.

4. A load cell in accordance with claim 3,
**characterised in that**
the at least one cover (39) is respectively configured as elastically deformable and/or rotationally symmetrical.

5. A load cell in accordance with at least one of the preceding claims,
**characterised in that**
an electrical line (37) is provided for the current supply of a motor and is led through the line leadthrough (35).

6. A load cell in accordance with claim 5,
**characterised in that**
the electrical line (37) is configured as freely sagging in the region of the hollow space (45).

7. A load cell in accordance with claim 5 or claim 6,
**characterised in that**
the electrical line (37) is configured as free from an insulating sheath in the region of the hollow space (45).

8. A load cell in accordance with at least one of the claims 5 to 7,
**characterised in that**
the electrical line (37) is configured at least sectionally as a plurality of individual wires respectively coated with an insulation, in particular with a clear lacquer.

9. A load cell in accordance with at least one of the claims 5 to 8,
**characterised in that**
the electrical line (37) has a respective plug at the two outlets of the line leadthrough (35); and/or **in that** a respective seal is provided at the two outlets of the line leadthrough (35).

10. A belt weighing apparatus, in particular a checkweigher, having a load cell (11) in accordance with any one of the preceding claims.

## Revendications

1. Cellule de pesage comprenant un corps de mesure (13) réalisé sous forme de barreau flexible, qui comprend un tronçon d'articulation (23) agencé entre un tronçon d'encaissement de force (15) et un tronçon d'application de force (17) et comprend une cavité (45) refermée de façon hermétiquement étanche vers l'extérieur, et comprenant au moins une jauge de contraintes (31) agencée sur le tronçon d'articulation (23),
**caractérisée en ce que**
le corps de mesure (13) comprend une traversée intégrée pour ligne (35), qui s'étend depuis le côté d'encaissement de force vers le côté d'application de force via la cavité (45) qui est agencée dans le tronçon d'articulation (23).

2. Cellule de pesage selon la revendication 1,
**caractérisée en ce que** ladite au moins une jauge de contrainte (31) est agencée sur un côté extérieur du corps de mesure (13).

3. Cellule de pesage selon la revendication 1 ou 2,
**caractérisée en ce que** la cavité (45) est refermée par au moins un couvercle (39), afin d'atteindre la fermeture hermétiquement étanche.

4. Cellule de pesage selon la revendication 3,
**caractérisée en ce que** ledit au moins un couvercle (39) est réalisé respectivement élastiquement déformable et/ou à symétrie de révolution.

5. Cellule de pesage selon l'une au moins des revendications précédentes,
**caractérisée en ce qu'**il est prévu une ligne électrique (37) pour l'alimentation électrique d'un moteur, qui est passée à travers la traversée pour ligne (35).

6. Cellule de pesage selon la revendication 5,
**caractérisée en ce que** la ligne électrique (37) est réalisée en suspension libre dans la zone de la cavité (45).

7. Cellule de pesage selon la revendication 5 ou 6,
**caractérisée en ce que** la ligne électrique (37) est réalisée exempte d'enrobage isolant dans la région de la cavité (45).

8. Cellule de pesage selon l'une au moins des revendications 5 à 7,
**caractérisée en ce que** la ligne électrique (37) est réalisée, au moins par tronçon, sous la forme de plusieurs fils individuels, revêtus chacun d'une isolation, en particulier d'un vernis.

9. Cellule de pesage selon l'une au moins des revendications 5 à 8,
**caractérisée en ce que** la ligne électrique (37) comporte respectivement une prise au niveau des deux sorties de la traversée pour ligne (35), et/ou **en ce qu'**il est prévu respectivement un joint au niveau des deux sorties de la traversée pour ligne (35).

10. Dispositif de pesage à bande, en particulier balance de contrôle, comprenant une cellule de pesage (11) selon l'une des revendications précédentes.
